# EUROPÄISCHE PATENTSCHRIFT

(11) **EP 2 993 298 B1**
(45) Veröffentlichungstag und Bekanntmachung des Hinweises auf die Patenterteilung: **25.10.2017**
(21) Anmeldenummer: 15184077.4
(22) Anmeldetag: 07.09.2015
(51) Int. Cl.: E06B 9/326, E06B 9/42

(54) **BETÄTIGUNGSEINRICHTUNG, INSBESONDERE FÜR EINE VERSCHATTUNGSANLAGE, ZUM BETÄTIGEN MIT EINEM STRANGELEMENT**
ACTUATING DEVICE, IN PARTICULAR FOR A DARKENING DEVICE, FOR ACTUATION WITH A THREAD ELEMENT
DISPOSITIF D'ACTIONNEMENT, EN PARTICULIER POUR UNE INSTALLATION D'OMBRAGE, A ACTIONNER A L'AIDE D'UN ELEMENT DE TIGE

(30) Priorität: 08.09.2014 DE 102014012963
(43) Veröffentlichungstag der Anmeldung: 09.03.2016
(73) Patentinhaber: Hunter Douglas Industries Switzerland GmbH, 6006 Luzern (CH)
(72) Erfinder: Gramsch, Wilfried, 27616 Beverstedt (DE)
(74) Vertreter: Tappe, Udo

(56) Entgegenhaltungen:
- US-A- 6 116 325
- US-A1- 2012 017 399

## Beschreibung

Die Erfindung betrifft eine Betätigungseinrichtung, insbesondere für eine Verschattungsanlage, zum Betätigen mit einem Strangelement, das einer ersten Teilstruktur zugeordnet ist, welche lösbar an einer zweiten Teilstruktur befestigt ist, wobei die erste Teilstruktur bei einem gleichzeitigen Zug an einem ersten Trum und an einem zweiten Trum des Strangelementes beim Überschreiten einer vorgegebenen Zugkraft von der zweiten Teilstruktur lösbar ist, und mit mindestens einem der ersten Teilstruktur zugeordnetem ersten Kopplungselement, das in einer Verriegelungsposition mit einem der zweiten Teilstruktur zugeordnetem zweiten Kopplungselement in Eingriff steht, wobei die erste Teilstruktur bei einem Zug an einem einzelnen Trum in die Verriegelungsposition verschwenkt ist, und die erste Teilstruktur bei einem gleichzeitigen Zug an den beiden Trums des Strangelements in eine Freigabeposition zum Lösen der ersten Teilstruktur von der zweiten Teilstruktur verschwenkt ist, wobei die erste Teilstruktur und die zweite Teilstruktur in der Freigabeposition mittels einer lösbaren Verbindung miteinander verbunden sind, das erste Kopplungselement in der Freigabeposition nicht mit dem zweiten Kopplungselement in Eingriff steht und dass in der Verriegelungsposition bei einem Zusammenwirken des ersten Kopplungselementes mit dem zweiten Kopplungselement ein Ablösen der ersten Teilstruktur von der zweiten Teilstruktur aufgrund einer formschlüssigen Verbindung zwischen dem ersten Kopplungselement und dem zweiten Kopplungselement verhindert ist.

Eine vergleichbare Betätigungseinrichtung ist aus der US 2012/0017399 A1 bekannt. Hierbei bilden zwei Kopplungselemente eine Kopplungseinrichtung zum Herstellen einer Verbindung der ersten Teilstruktur mit der zweiten Teilstruktur.

Aus der US 6,116,325 A ist bekannt, dass Stege aus einem flexiblen Material ausgebildet sind, wobei bei einem gleichzeitigen Zug an beiden Trums mit einer hinreichend großen Kraft die Stege derart auseinandergebogen werden, dass sich die erste Teilstruktur von der zweiten Teilstruktur ablöst. Bei einem Zug an einem einzelnen Trum wird die erste, Teilstruktur derart verschwenkt, dass das erste Kopplungselement eines Steges der ersten Teilstruktur an einem zweiten Kopplungselement der zweiten Teilstruktur anschlägt. Hierdurch ist ein Aufbiegen des jeweiligen Steges und damit ein Lösen der aneinander liegenden Kopplungselemente verhindert.

Nachteilig ist hierbei, dass ein ungewolltes Aufbiegen der Stege bzw. ein Lösen der ersten und zweiten Kopplungselemente in der Verriegelungsposition nicht völlig ausschließbar ist. Weiter ist von Nachteil, dass die Stege bzw. die ersten Kopplungselemente zum Lösen der ersten Teilstruktur von der zweiten Teilstruktur voneinander weg gebogen werden müssen. Hierbei besteht die Gefahr, dass sich die erste Teilstruktur nicht rechtzeitig bzw. erst bei einer unzulässig großen Kraft von der zweiten Teilstruktur lösen lässt. Des Weiteren kann die Verwendung flexibler bzw. elastischer Stege zu einer Materialermüdung und im schlimmsten Fall zu einem Materialbruch führen. Hierdurch besteht die Gefahr, dass die Betätigungseinrichtung ihre vorgesehene Funktion nicht dauerhaft erfüllen kann.

Des Weiteren ist bekannt, dass sich das Strangelement bei Verschattungsanlagen mit freihängenden Strangelementen, insbesondere wenn dieses eine freihängende Schlaufe bildet, zur Erfüllung der DIN-Norm EN 13120 bei einem Zuggewicht von 6 kg oder mehr ablösen muss, um eine Verletzung einer Person bzw. eines Kindes, insbesondere aufgrund einer Strangulierung, zu vermeiden.

Es ist die der Erfindung zugrundeliegende Aufgabe, eine Betätigungseinrichtung der eingangs genannten Art derart weiterzuentwickeln, dass einerseits die Gefahr eines ungewollten Ablösens der ersten Teilstruktur von der zweiten Teilstruktur im vorgesehenen Gebrauch möglichst vermeidbar ist und andererseits ein Ablösen der ersten Teilstruktur von der zweiten Teilstruktur mit möglichst geringen Kräften zur Vermeidung von Verletzungen ermöglicht ist. Insbesondere ist es die der Erfindung zugrundeliegende Aufgabe, dass einerseits bei einer wahlweisen Betätigung des ersten Trums oder des zweiten Trums eine möglichst hohe Zugkraft ohne das Risiko einer unerwünschten Trennung der beiden Teilstrukturen übertragbar ist und andererseits eine vorgebbare möglichst geringe Zugkraft zum Lösen der beiden Teilstrukturen voneinander bei einem gleichzeitigen Zug an dem ersten Trum und dem zweiten Trum ausreicht. Vorzugsweise soll die Gefahr von Materialermüdungen reduziert sein.

Die der Erfindung zugrundeliegende Aufgabe wird durch eine Betätigungseinrichtung der eingangs genannten Art gelöst, die dadurch gekennzeichnet ist, dass das erste Kopplungselement und das zweite Kopplungselement eine erste Kopplungseinrichtung bilden und dass eine zu der ersten Kopplungseinrichtung separate zweite Kopplungseinrichtung zum Herstellen einer weiteren Verbindung der ersten Teilstruktur mit der zweiten Teilstruktur in einer Verriegelungsposition bei einem Zug an einem einzelnen Trum vorhanden ist, womit gleichzeitig zwei Verbindungen zwischen der ersten Teilstruktur und der zweiten Teilstruktur herstellbar sind.

Hierbei ist von Vorteil, dass das erste Kopplungselement lediglich in der Verriegelungsposition mit dem zweiten Kopplungselement zusammenwirkt, wodurch die Verbindung zwischen der ersten Teilstruktur und der zweiten Teilstruktur verstärkt ist. Hierdurch können ohne die Gefahr eines unerwünschten Lösens bei einem Zug an einem einzelnen Trum größere Kräfte in der Verriegelungsposition übertragen werden, in der die erste Teilstruktur in Bezug zu der zweiten Teilstruktur verschwenkt ist. Insbesondere in der Freigabeposition ist das erste Kopplungselement funktionslos und/oder berührungslos in Bezug zur zweiten Teilstruktur angeordnet. Somit kann das erste Kopplungselement ein Ablösen der ersten Teilstruktur von der zweiten Teilstruktur in der Freigabeposition nicht behindern. Hierdurch kann das erste Kopplungselement und/oder das zweite Kopplungselement beispielsweise massiv und/oder starr ausgebildet werden. Insbesondere ist das erste Kopplungselement an der ersten Teilstruktur und/oder das zweite Kopplungselement an der zweiten Teilstruktur befestigt.

Aufgrund einer beispielweise starren Ausbildung der ersten Kopplungselemente und der zweiten Kopplungselemente ist eine, insbesondere rein, formschlüssige Verbindung herstellbar, wodurch eine besonders belastbare Verbindung zwischen der ersten Teilstruktur und der zweiten Teilstruktur bei einem Zug an einem einzelnen Trum realisierbar ist. Insbesondere ist die gesamte erste Teilstruktur und/oder die gesamte zweite Teilstruktur, vorzugsweise ausgenommen von den Bestandteilen zur Bildung einer lösbaren Verbindung in der Freigabeposition, starr ausgebildet. Hierdurch ist die Gefahr einer Materialermüdung erheblich reduzierbar. Darüber hinaus ist aufgrund der formschlüssigen Verbindung zwischen der ersten Teilstruktur und der zweiten Teilstruktur bei einem Zug an einem einzelnen Trum die Gefahr eines ungewünschten Ablösens der ersten Teilstruktur von der zweiten Teilstruktur im üblichen Gebrauch praktisch vollständig vermeidbar.

Insbesondere ist die erste Teilstruktur bei einer Zugkraft und/oder einem Zug nur an einem einzigen Trum in eine Verriegelungsposition bewegbar. Somit ist bei einer für den normalen Betrieb übliche Betätigung der Betätigungseinrichtung aufgrund eines Ziehens an dem ersten Trum oder dem zweiten Trum eine formschlüssige Verbindung zwischen der ersten Teilstruktur und der zweiten Teilstruktur herstellbar. Hierdurch sind hohe Zugkräfte übertragbar, wobei die Gefahr einer unbeabsichtigten Trennung der Verbindung zwischen der ersten Teilstruktur und der zweiten Teilstruktur erheblich reduziert ist. Die an dem ersten Trum und/oder dem zweiten Trum angreifende Zugkraft bzw. der angreifende Zug kann eine vertikale, lotrechte und/oder nach unten gerichtete Kraftkomponente aufweisen. Vorzugsweise ist im Rahmen der vorliegenden Erfindung unter einem Zug und/oder einer Zugkraft an nur einem einzigen Trum auch der Fall zu verstehen, dass auf diesen Trum eine höhere Zugkraft und/oder ein höherer Zug als auf den anderen Trum wirkt.

Insbesondere weist die Betätigungseinrichtung eine erste, in der Freigabeposition lösbare Verbindung zwischen der ersten Teilstruktur und der zweiten Teilstruktur auf. Diese erste Verbindung kann als eine Rastverbindung ausgebildet sein. Die erste Verbindung ist bei einem gleichzeitigen Zug an dem ersten Trum und an dem zweiten Trum des Strangelementes beim Überschreiten einer vorgegebenen Zugkraft lösbar. Vorzugsweise hat die Betätigungseinrichtung in der Verriegelungsposition eine zu der ersten Verbindung zusätzliche zweite Verbindung, die mittels des ersten Kopplungselementes und des zweiten Kopplungselementes gebildet ist.

Vorzugsweise ist die erste Teilstruktur bei keiner nur an dem ersten Trum oder nur an dem zweiten Trum angreifenden Zugkraft in der Freigabeposition angeordnet. Insbesondere ist die erste Teilstruktur bei einer gleichzeitig an dem ersten Trum und an dem zweiten Trum angreifenden, insbesondere im Wesentlichen gleichen, Zugkraft in der Freigabeposition. Vorzugsweise wird in der Freigabeposition keine zu der lösbaren ersten Verbindung zusätzliche, insbesondere formschlüssige, Verbindung zwischen der ersten Teilstruktur und der zweiten Teilstruktur hergestellt. Somit kann die lösbare erste Verbindung in der Freigabeposition, vorzugsweise zerstörungsfrei, aufgelöst werden, wodurch die erste Teilstruktur von der zweiten Teilstruktur lösbar ist. Vorzugsweise ist zum Trennen der ersten Verbindung der ersten Teilstruktur von der zweiten Teilstruktur mindestens eine lotrechte, vertikale und/oder nach unten gerichtete Kraftkomponente notwendig. Die Freigabeposition kann zwischen einer ersten Verriegelungsposition und einer zweiten Verriegelungsposition angeordnet sein. Hierbei kann die Freigabeposition als eine Mittelposition ausgebildet sein.

Vorzugsweise ist die erste Teilstruktur zwischen einer Freigabeposition und zwei Verriegelungspositionen bewegbar, insbesondere verschwenkbar. Insbesondere wird die erste Teilstruktur in der Freigabeposition ausschließlich von einer lösbaren ersten Verbindung, insbesondere Rastverbindung, an der zweiten Teilstruktur gehalten. Vorzugsweise wirkt jeweils ein erstes Kopplungselement der ersten Teilstruktur mit einem zweiten Kopplungselement der zweiten Teilstruktur zum Herstellen der, insbesondere formschlüssigen und/oder zweiten, Verbindung in einer Verriegelungsposition zusammen. Somit können die erste Teilstruktur und/oder die zweite Teilstruktur jeweils zwei erste Kopplungselemente bzw. zweite Kopplungselemente aufweisen. In der Verriegelungsposition bzw. aufgrund der, insbesondere formschlüssigen und/oder zweiten, Verbindung können die beiden Teilstrukturen nicht zerstörungsfrei voneinander gelöst werden. Insbesondere ist die Betätigungseinrichtung, insbesondere die zweite Verbindung, in einer Verriegelungsposition zur Aufnahme hoher Zugkräfte, vorzugsweise mit einem Zuggewicht von mehr als 2 kg, insbesondere von mehr als 4 kg, besonders bevorzugt von mehr als 6 kg, ausgebildet.

Vorzugsweise ist bei einem Zusammenwirken eines ersten Kopplungselementes mit einem zweiten Kopplungselement ein Ablösen der ersten Teilstruktur von der zweiten Teilstruktur aufgrund einer formschlüssigen und/oder kraftschlüssigen Verbindung zwischen der ersten Teilstruktur und der zweiten Teilstruktur verhindert. Hierbei kann das erste Kopplungselement als ein erstes Rastelement, insbesondere ein Rasthaken, ausgebildet sein. Des Weiteren kann das zweite Kopplungselement als ein zweites Rastelement ausgebildet sein. Insbesondere ist das zweite Rastelement korrespondierend zum ersten Rastelement ausgebildet. Beispielsweise ist das zweite Rastelement eine Rasthakenaufnahme. Die beiden ersten Kopplungselemente der ersten Teilstruktur können einander zugewandt oder voneinander abgewandt sein. Insbesondere sind bei einander zugewandten ersten Kopplungselementen die zweiten Kopplungselemente der zweiten Teilstruktur voneinander abgewandt ausgerichtet. Analog hierzu können die zweiten Kopplungselemente einander zugewandt sein, wenn die ersten Kopplungselemente voneinander abgewandt sind.

Nach einer Weiterbildung ist bei einem Zug nur an dem ersten Trum die erste Teilstruktur in Richtung des zweiten Trums verschwenkt. Insbesondere wirkt das dem ersten Trum benachbarte erste Kopplungselement mit dem dem ersten Trum zugeordneten zweiten Kopplungselement formschlüssig und/oder kraftschlüssig zusammen. Bei einem Zug nur an dem zweiten Trum kann die erste Teilstruktur in Richtung des ersten Trums verschwenkt werden. Insbesondere wirkt das dem zweiten Trum benachbarte erste Kopplungselement mit dem dem zweiten Trum zugeordneten zweiten Kopplungselement formschlüssig und/oder kraftschlüssig zusammen. Vorzugsweise ist die Verschwenkbewegung der ersten Teilstruktur durch das Zusammenwirken des ersten Kopplungselementes mit dem zweiten Kopplungselement begrenzt. Aufgrund der Verschwenkbewegung der ersten Teilstruktur kann jeweils ein erstes Kopplungselement in eine Verriegelungsposition mit jeweils einem zweiten Kopplungselement geführt werden. Vorzugsweise schwingt die erste Teilstruktur beim Loslassen eines zuvor gezogenen Trums selbsttätig, insbesondere aufgrund der wirkenden Schwerkraft, in die Freigabeposition zurück. Die Freigabeposition kann mittig zwischen den beiden Verriegelungspositionen angeordnet sein.

Vorzugsweise ist die erste Teilstruktur bei einer Zugkraft nur an dem ersten Trum in eine erste Verriegelungsposition und/oder bei einer Zugkraft nur an dem zweiten Trum in eine zweite Verriegelungsposition bewegbar. Das Strangelement kann flexibel ausgebildet sein. Insbesondere ist das Strangelement eine Schnur, eine Kette, eine Kugelkette, ein Riemen und/oder ein Band. Des Weiteren kann das Strangelement als eine Endlosschleife ausgebildet sein. Vorzugsweise hat das Strangelement zwei im Wesentlichen parallel zueinander ausgerichtete Strangabschnitte, wobei ein erster Strangabschnitt als der erste Trum und ein zweiter Strangabschnitt als ein zweiter Trum ausgebildet sein kann. Im montierten Zustand kann das Strangelement bzw. der erste Trum und der zweite Trum von der ersten Teilstruktur, insbesondere senkrecht, nach unten herabhängen. Insbesondere zum Betätigen der Betätigungseinrichtung für ein Verstellen eines Verschattungsbehanges wird der erste Trum oder der zweite Trum im Wesentlichen nach unten und/oder von der ersten Teilstruktur weg gezogen.

Insbesondere hat die Betätigungseinrichtung, insbesondere zum Betätigen einer Verschattungsanlage und/oder zum Betätigen mit einem Strangelement mit einem ersten Trum und einem zweiten Trum, eine Grundstruktur aus einer ersten Teilstruktur und einer zweiten Teilstruktur. Das Strangelement ist der ersten Teilstruktur zugeordnet, wobei die erste Teilstruktur und die zweite Teilstruktur sind mittels einer lösbaren Verbindung miteinander verbindbar sind. Die, insbesondere erste, Verbindung oder Rastverbindung ist bei einem gleichzeitigen Zug am ersten Trum und am zweiten Trum beim Überschreiben einer vorgegebenen Zugkraft lösbar. Vorzugsweise hat die erste Teilstruktur zwei in Richtung der zweiten Teilstruktur gerichtete Stege, an deren freien Enden jeweils ein erstes Kopplungselement zum Zusammenwirken mit einem zweiten Kopplungselement der zweiten Teilstruktur angeordnet ist. Insbesondere sind die Stege, die ersten Kopplungselemente und/oder die zweiten Kopplungselemente zum Herstellen einer, vorzugsweise weiteren, zweiten und/oder formschlüssigen, Verbindung der ersten Teilstruktur mit der zweiten Teilstruktur bei einem Zug an einem einzelnen Trum starr ausgebildet.

Nach einer weiteren Ausführungsform ist die erste Teilstruktur als ein unteres Gehäuseteil und/oder die zweite Teilstruktur als ein oberes Gehäuseteil ausgebildet. Die erste Teilstruktur kann mindestens eine Gehäuseseite mit einer Achse zum drehbaren Lagern eines ersten Zahnrades aufweisen. Insbesondere ist die Achse an einer Innenseite der Gehäuseseite angeordnet. Vorzugsweise weist die erste Teilstruktur und/oder die zweite Teilstruktur zwei voneinander beabstandete und im Wesentlichen parallel zueinander angeordnete Gehäuseseiten auf. Zwischen den Innenseiten der beiden Gehäuseseiten der ersten Teilstruktur und/oder der zweiten Teilstruktur kann, insbesondere jeweils, eine Achse drehfest und/oder einstückig mit den Gehäuseseiten verbunden sein.

Insbesondere hat die erste Teilstruktur ein erstes Zahnrad und/oder die zweite Teilstruktur ein zweites Zahnrad. Insbesondere greifen die beiden Zahnräder der ersten Teilstruktur und der zweiten Teilstruktur ineinander ein, wenn die, insbesondere lösbare und/oder erste, Verbindung zwischen der ersten Teilstruktur und der zweiten Teilstruktur hergestellt ist. Unabhängig von der Lage der ersten Teilstruktur zu der zweiten Teilstruktur greifen die beiden Zahnräder ineinander ein. Insbesondere bei einer hergestellten weiteren oder zweiten Verbindung zwischen einem ersten Kopplungselement und einem zweiten Kopplungselement und/oder in einer Verriegelungsposition kann eine Drehbewegung des ersten Zahnrades auf eine Drehbewegung des zweiten Zahnrades übertragen werden. Vorzugsweise weist das erste Zahnrad Aufnahmen für das Strangelement auf. Somit kann durch ein Ziehen an dem Strangelement das erste Zahnrad in eine Drehbewegung um das Lager bzw. die Achse der ersten Teilstruktur erzeugt werden. Mittels des ersten Zahnrades kann das zweite Zahnrad in eine Drehbewegung um die Achse der zweiten Teilstruktur versetzt werden.

Vorzugsweise erfolgt ein Verschwenken der ersten Teilstruktur in Bezug zu der zweiten Teilstruktur aufgrund einer Wechselwirkung des ersten Zahnrades mit dem zweiten Zahnrad. Insbesondere steht ein Strangelement in Eingriff mit dem ersten Zahnrad der ersten Teilstruktur und/oder ist mindesten teilweise um das erste Zahnrad herum geführt. Je stärker an dem ersten Trum oder dem zweiten Trum dieses Strangelementes gezogen wird, desto stärker ist die Verschwenkung der ersten Teilstruktur in Bezug zu der zweiten Teilstruktur. Vorzugsweise wird das erste Zahnrad bei einem Zug an dem ersten Trum oder dem zweiten Trum des mit dem ersten Zahnrad zusammenwirkenden Strangelementes koaxial um die Achse des zweiten Zahnrades geführt und/oder verschwenkt.

Insbesondere hat die erste Teilstruktur eine im Wesentlichen U-förmige Seitenwandung, dessen Schenkel in Richtung der zweiten Teilstruktur gerichtete Stege bilden. An den freien Enden der Stege kann jeweils ein erstes Kopplungselement zum Zusammenwirken mit einem zweiten Kopplungselement der zweiten Teilstruktur angeordnet sein. Vorzugsweise definiert die Breite der Seitenwandung den Abstand zwischen den beiden Gehäuseseiten der ersten Teilstruktur. Das erste Zahnrad kann innerhalb der Seitenwandung aufgenommen sein und/oder teilweise von der Seitenwandung umgeben oder umschlossen sein. Die zweite Teilstruktur kann ebenfalls eine im Wesentlichen U-förmige Seitenwandung aufweisen, wobei deren Schenkel der ersten Teilstruktur zugewandt sind. Innerhalb der Seitenwandung der zweiten Teilstruktur kann das zweite Zahnrad angeordnet sein. Im Bereich der freien Enden der Schenkel der U-förmigen Seitenwandung der zweiten Teilstruktur können die zweiten Kopplungselemente angeordnet sein. Insbesondere weisen die Schenkel und/oder Stege der ersten Teilstruktur jeweils ein erstes Kopplungselement und die Schenkel und/oder Stege der zweiten Teilstruktur jeweils ein zweites Kopplungselement auf.

Vorzugsweise weisen die erste Teilstruktur und die zweite Teilstruktur jeweils an zwei voneinander abgewandten Seiten eine Gehäuseseite auf. Vorzugsweise wirken die, insbesondere voneinander beabstandeten und/oder parallel zueinander angeordneten, Gehäuseseiten der ersten Teilstruktur und der zweiten Teilstruktur zum Herstellen der bei einem gleichzeitigen Zug an beiden Trums lösbaren, insbesondere ersten, Verbindung der ersten Teilstruktur mit der zweiten Teilstruktur zusammen. Insbesondere sind die Gehäuseseiten derart angeordnet, dass sich diese mindestens teilweise überlappen. Beispielsweise können die Gehäuseseiten der zweiten Teilstruktur teilweise die Gehäuseseiten der ersten Teilstruktur überlappen. Insbesondere kann die erste Teilstruktur zum Herstellen der lösbaren, insbesondere ersten, Verbindung teilweise in die zweite Teilstruktur eingeführt und/oder eingesteckt sein. Vorzugsweise ist die erste Teilstruktur und/oder die zweite Teilstruktur, insbesondere die Gehäuseseiten der ersten Teilstruktur und/oder die Gehäuseseiten der zweiten Teilstruktur, mindestens im Bereich der lösbaren, insbesondere ersten, Verbindung flexibel und/oder elastisch ausgebildet.

Nach einer Weiterbildung ermöglicht die lösbare, insbesondere erste, Verbindung zwischen der ersten Teilstruktur und der zweiten Teilstruktur mindestens ein teilweises Verschwenken der ersten Teilstruktur um eine Achse im Bereich der zweiten Teilstruktur. Vorzugsweise entspricht die Verschwenkungsachse der Lage der Achse der zweiten Teilstruktur zum Aufnehmen des zweiten Zahnrades. Insbesondere weist die lösbare, insbesondere erste, Verbindung eine kreissegmentartige Nut und einen, vorzugsweise korrespondierend ausgebildeten kreissegmentartigen, Steg auf, der in die kreissegmentartige Nut zum Herstellen der lösbaren Rastverbindung eingreift. Insbesondere sind der, insbesondere kreissegmentartige, Steg und die kreissegmentartige Nut in die Gehäuseseiten der ersten Teilstruktur und der zweiten Teilstruktur eingebracht. Beispielsweise ist eine kreissegmentartige Nut in die Außenseite der Gehäuseseiten der ersten Teilstruktur eingebracht. Ein, insbesondere kreissegmentartiger, Steg kann in die Innenseite der Gehäuseseiten der zweiten Teilstruktur eingebracht sein. Die erste Teilstruktur kann derart zwischen die beiden Gehäuseseiten der zweiten Teilstruktur eingeschoben werden, dass die, insbesondere kreissegmentartigen, Stege der zweiten Teilstruktur in die kreissegmentartigen Nuten der ersten Teilstruktur einrasten. Insbesondere weist der kreissegmentartige Steg zum Ermöglichen der Verschwenkbarkeit der ersten Teilstruktur in Bezug zu der zweiten Teilstruktur eine deutlich geringere Breite und/oder Bogenlänge auf als die kreissegmentartige Nut.

Nach einer weiteren Ausführungsform bilden die ersten Kopplungselemente und die zweiten Kopplungselemente eine erste Kopplungseinrichtung. Hierbei dient die erste Kopplungseinrichtung zum Realisieren einer, insbesondere starren, formschlüssigen und/oder zweiten, Verbindung zwischen der ersten Teilstruktur und der zweiten Teilstruktur, um ein ungewolltes Ablösen der ersten Teilstruktur von der zweiten Teilstruktur bei einem Zug an einem einzelnen Trum zu verhindern. Insbesondere ist die erste Kopplungseinrichtung funktional und/oder räumlich von der in der Freigabeposition lösbaren, insbesondere ersten, Verbindung getrennt.

Vorzugsweise ist eine zu der ersten Kopplungseinrichtung separate zweite Kopplungseinrichtung zum Herstellen einer weiteren, insbesondere starren, formschlüssigen und/oder dritten, Verbindung der ersten Teilstruktur mit der zweiten Teilstruktur bei einem Zug an einem einzelnen Trum vorhanden. Somit ist eine zu der ersten Kopplungseinrichtung zusätzliche, insbesondere unabhängig von der ersten Kopplungseinrichtung wirkende, zweite Kopplungseinrichtung vorgesehen. Somit sind bei einem Zug an einem einzelnen Trum gleichzeitig zwei, insbesondere formschlüssige, Verbindungen zwischen der ersten Teilstruktur und der zweiten Teilstruktur herstellbar. Hierdurch ist auf besonders zuverlässige Weise gewährleistbar, dass sich die erste Teilstruktur nicht unbeabsichtigt von der zweiten Teilstruktur ablösen lässt. Zudem ist hierdurch eine Redundanz realisiert, wodurch selbst bei einem Totalausfall der ersten Kopplungseinrichtung oder der zweiten Kopplungseinrichtung die Funktionalität der Betätigungseinrichtung uneingeschränkt aufrechterhalten wird.

Vorzugsweise weist die zweite Kopplungseinrichtung mindestens einen im Wesentlichen T-förmigen Rastkopf und mindestens eine korrespondierend zu dem Rastkopf ausgebildete im Wesentlichen T-förmige Rastkopfaufnahme auf. Insbesondere ist die zweite Kopplungseinrichtung in die Gehäuseseiten der ersten Teilstruktur und der zweiten Teilstruktur integriert. Beispielsweise ist der Rastkopf in der ersten Teilstruktur und die Rastaufnahme in der zweiten Teilstruktur oder umgekehrt angeordnet. Vorzugsweise ist der Rastkopf bei einem gleichzeitigen Zug an beiden Trums berührungsfrei aus der Rastkopfaufnahme lösbar. Ein Schenkel des T-förmigen Rastkopfes kann in eine korrespondierend ausgebildete Schenkelaufnahme der T-förmigen Rastkopfaufnahme bei einem Zug an einem einzelnen Trum formschlüssig eingreifen. Hierdurch ist die formschlüssige Verbindung mittels der zweiten Kopplungseinrichtung realisierbar.

Vorzugsweise ist eine dritte Kopplungseinrichtung zum Herstellen einer, insbesondere formschlüssigen und/oder vierten, Verbindung der ersten Teilstruktur mit der zweiten Teilstruktur bei einem Zug an einem einzelnen Trum bzw. in der Verriegelungsposition der ersten Teilstruktur vorhanden. Hierbei kann der Aufbau der dritten Kopplungseinrichtung im Wesentlichen dem Aufbau der zweiten Kopplungseinrichtung entsprechen. Die zweite Kopplungseinrichtung und die dritte Kopplungseinrichtung können an zwei voneinander abgewandten Seiten der Betätigungseinrichtung, insbesondere in zwei Gehäuseseiten der ersten Teilstruktur und der zweiten Teilstruktur, angeordnet sein.

Von besonderem Vorteil ist eine Verschattungsanlage, insbesondere eine Jalousie, ein Plissee und/oder ein Rollo, mit einer erfindungsgemäßen Betätigungseinrichtung. Die Betätigungseinrichtung ermöglicht einerseits bei einer wahlweisen Betätigung des ersten Trums oder des zweiten Trums die Übertragung einer hohen Zugkraft ohne das Risiko einer unerwünschten Trennung der Verbindung der ersten Teilstruktur von der zweiten Teilstruktur. Dies wird durch mindestens eine erste Kopplungseinrichtung ermöglicht, mittels der beispielsweise eine starre, formschlüssige Verbindung zwischen der ersten Teilstruktur und der zweiten Teilstruktur realisierbar ist. Hierbei ist die Kopplungseinrichtung separat zu einer lösbaren ersten Verbindung ausgebildet, die die erste Teilstruktur in der Freigabeposition an der zweiten Teilstruktur hält. Andererseits ist die lösbare erste Verbindung zwischen der ersten Teilstruktur und der zweiten Teilstruktur derart ausbildbar, dass eine geringe Zugkraft zum Lösen der ersten Verbindung bei einem gleichzeitigen Zug an dem ersten Trum und dem zweiten Trum ausreicht. Insbesondere ist die erste Verbindung, vorzugsweise als eine Rastverbindung, zwischen der ersten Teilstruktur und der zweiten Teilstruktur in der Freigabeposition, insbesondere zerstörungsfrei, bei einem Zuggewicht gleichzeitig auf den ersten Trum und den zweiten Trum von mindestens 6 kg lösbar. Hierdurch kann beispielsweise das Erfordernis der DIN-Norm EN 13120 erfüllt werden.

Nachfolgend wird die Erfindung anhand der Figuren näher erläutert. Es zeigen:
- Fig. 1: eine schematische, perspektivische Ansicht einer erfindungsgemäßen Betätigungseinrichtung,
- Fig. 2: eine schematische, teilweise geöffnete perspektivische Ansicht der Betätigungseinrichtung gemäß Fig. 1,
- Fig. 3: eine schematische, geöffnete perspektivische Ansicht der Betätigungseinrichtung gemäß Fig. 1 und 2,
- Fig. 4: einen schematischen, geschnittenen Teilausschnitt einer erfindungsgemäßen Betätigungseinrichtung,
- Fig. 5: eine schematische, perspektivische Ansicht der erfindungsgemäßen Betätigungseinrichtung nach Fig. 1 mit einer abgelösten ersten Teilstruktur, und
- Fig. 6: eine weitere Schnittdarstellung des schematischen, geschnittenen Teilausschnittes gemäß Fig. 4.

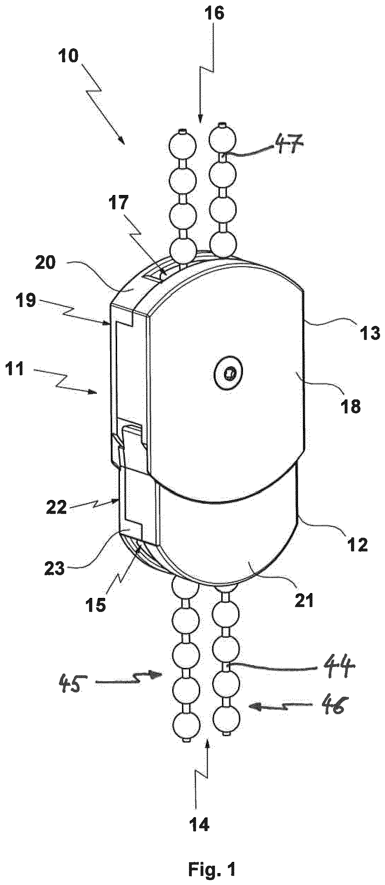

Fig. 1 zeigt eine schematische, perspektivische Ansicht einer erfindungsgemäßen Betätigungseinrichtung 10. Bei diesem Ausführungsbeispiel ist die Betätigungseinrichtung 10 als eine Kettenradkopplung ausgebildet. Die Betätigungseinrichtung 10 dient zum Betätigen einer hier nicht näher dargestellten Verschattungsanlage. Hierzu ist ein Strangelement 44 vorgesehen. Bei diesem Ausführungsbeispiel ist das Strangelement 44 eine Kugelkette. Das Strangelement 44 hat einen ersten Trum 45 und einen zweiten Trum 46.

Die Betätigungseinrichtung 10 hat eine Grundstruktur 11, die eine erste Teilstruktur 12 und eine zweite Teilstruktur 13 aufweist. Hier ist die erste Teilstruktur 12 als ein unteres Gehäuseteil und die zweite Teilstruktur 13 als ein oberes Gehäuseteil ausgebildet. Ein oberer Bereich der ersten Teilstruktur 12 ist teilweise in einen unteren Bereich der zweiten Teilstruktur 13 eingeführt. Die erste Teilstruktur 12 hat ein von der zweiten Teilstruktur 13 abgewandtes Ende 14. Dem Ende 14 ist eine Zugangsöffnung 15 zugeordnet, die hier beispielhaft spaltartig ausgebildet ist. Mittels der Zugangsöffnung 15 kann das Strangelement 44 als ein erstes Strangelement 44 in die erste Teilstruktur 12 hinein- und herausgeführt werden. Im Gebrauch hängt das Strangelement 44 aus der Zugangsöffnung 15 herab und bildet an seinem von der Betätigungseinrichtung 10 abgewandten Ende eine hier nicht näher dargestellte Schlaufe. Die zweite Teilstruktur 13 weist an einem von der ersten Teilstruktur 12 abgewandten Ende 16 eine weitere Zugangsöffnung 17 auf. Die weitere Zugangsöffnung 17 ist hier beispielhaft spaltartig ausgebildet und dient zum Einführen und Ausführen eines weiteren oder zweiten Strangelementes 47 in bzw. aus der zweiten Teilstruktur 13.

Die zweite Teilstruktur 13 hat zwei parallel zueinander angeordnete und voneinander beabstandete Gehäuseseiten 18, 19. Im Bereich des Außenumfanges der Gehäuseseiten 18, 19 ist zwischen den Gehäuseseiten 18, 19 eine Seitenwandung 20 angeordnet. Die Seitenwandung 20 der zweiten Teilstruktur 13 hat einen im Wesentlichen U-förmigen Querschnitt.

Des Weiteren hat die erste Teilstruktur 12 zwei parallel zueinander angeordnete und voneinander beabstandete Gehäuseseiten 21, 22. Eine im Querschnitt im Wesentlichen U-förmige Seitenwandung 23 der ersten Teilstruktur 12 ist im Bereich des Außenumfanges der Gehäuseseiten 21, 22 angeordnet und beabstandet die Gehäuseseiten 21 und 22 voneinander.

Die Breite der Seitenwandung 23 der ersten Teilstruktur 12 ist bei diesem Ausführungsbeispiel kleiner als die Breite der Seitenwandung 20 der zweiten Teilstruktur 13. Im Wesentlichen entspricht die Differenz der Breiten zwischen den Seitenwandung 20, 23 etwa der Summe der Dicke der beiden Gehäuseseiten 18, 19. Darüber hinaus weist die Seitenwandung 20 der zweiten Teilstruktur 13 in einem der ersten Teilstruktur 12 zugewandten Bereich in Bezug zu den Gehäuseseiten 18, 19 einen Rücksprung auf. Hierdurch ist ein teilweises Einschieben der ersten Teilstruktur 12 in einen von dem Ende 16 der zweiten Teilstruktur 13 abgewandten Bereich wie dargestellt ermöglicht.

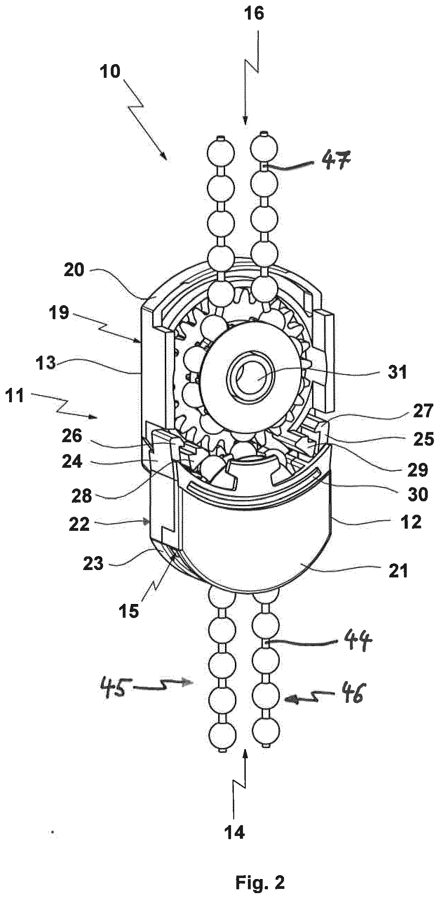

Fig. 2 zeigt eine schematische, perspektivische teilgeöffnete Ansicht der Betätigungseinrichtung 10 gemäß Fig. 1. Ein Teil mit der Gehäuseseite 18 ist von der zweiten Teilstruktur 13 entfernt, wodurch die zweite Teilstruktur 13 geöffnet und der innere Aufbau erkennbar ist.

Die erste Teilstruktur 12 hat zwei in Richtung der zweiten Teilstruktur 13 und im Wesentlichen parallel zueinander ausgerichtete Stege 24, 25. Bei diesem Ausführungsbeispiel sind die Stege 24, 25 als Schenkel der im Wesentlichen U-förmigen Seitenwandung 23 der ersten Teilstruktur 12 ausgebildet. An den der zweiten Teilstruktur 13 zugewandten freien Enden der Stege 24, 25 ist jeweils ein erstes Kopplungselement 26 bzw. 27 angeordnet. Hier sind die ersten Kopplungselemente 26, 27 als Rasthaken ausgebildet. Die Rasthaken 26, 27 sind einander zugewandt ausgerichtet.

Die zweite Teilstruktur 13 weist in einem der ersten Teilstruktur 12 zugewandten Bereich zweite Kopplungselemente 28, 29 auf, die jeweils zum Zusammenwirken mit einem der ersten Kopplungselemente 26, 27 ausgebildet sind. Somit sind die zweiten Kopplungselemente 28, 29 bei diesem Ausführungsbeispiel als Rasthakenaufnahmen ausgebildet. Das zweite Kopplungselement 28 ist dem ersten Kopplungselement 26 zugeordnet und das zweite Kopplungselement 29 ist dem ersten Kopplungselement 27 zugeordnet. Die ersten Kopplungselemente 26, 27 und die zweiten Kopplungselemente 28, 29 bilden eine erste Kopplungseinrichtung und sind starr ausgebildet.

Gemäß der Darstellung nach Fig. 2 befindet sich die erste Teilstruktur 12 in einer Freigabeposition, in der keines der ersten Kopplungselemente 26, 27 mit einem zweiten Kopplungselement 28, 29 zusammenwirkt. Vielmehr sind die ersten Kopplungselemente 26, 27 in der dargestellten Freigabeposition von den zweiten Kopplungselementen 28, 29 derart beabstandet, dass die beiden ersten Kopplungselemente 26, 27 berührungsfrei an den zweiten Kopplungselementen 28, 29 zum Ablösen der ersten Teilstruktur 12 von der zweiten Teilstruktur 13 vorbeiführbar sind. Somit sind die ersten Kopplungselemente 26, 27 in der Freigabeposition nicht in Eingriff mit den zweiten Kopplungselementen 28, 29.

Die erste Teilstruktur 12 weist in einem der zweiten Teilstruktur 13 zugewandten Bereich eine Nut 30 auf. Die Nut 30 ist kreissegmentartig ausgebildet und in die Außenseite der Gehäuseseite 21 der ersten Teilstruktur 12 eingelassen. Eine analog hierzu ausgebildete Nut befindet sich auch in der Gehäuseseite 22 der ersten Teilstruktur 12. Der Mittelpunkt des Radius der kreissegmentartigen Nut 30 entspricht dem Mittelpunkt einer Achse 31, die der zweiten Teilstruktur 13 zugeordnet ist. Die Innenseiten der Gehäuseseiten 18, 19 der zweiten Teilstruktur 13 weisen einen hier nicht näher dargestellten Steg auf, der zum Herstellen einer lösbaren Rastverbindung in die Nut 30 eingreift. Zum Herstellen und Lösen der Rastverbindung ist der Steg hinreichend flexibel ausgebildet.

In der hier dargestellten Freigabeposition ist der Steg im Wesentlichen mittig in der Nut 30 angeordnet. Die Bogenlänge der Nut 30 ist größer als die Breite oder die Bogenlänge des Steges. Hierdurch ermöglicht die Rastverbindung ein Verschwenken der ersten Teilstruktur 12 um den Mittelpunkt bzw. die Mittelachse der Achse 31 der zweiten Teilstruktur 13.

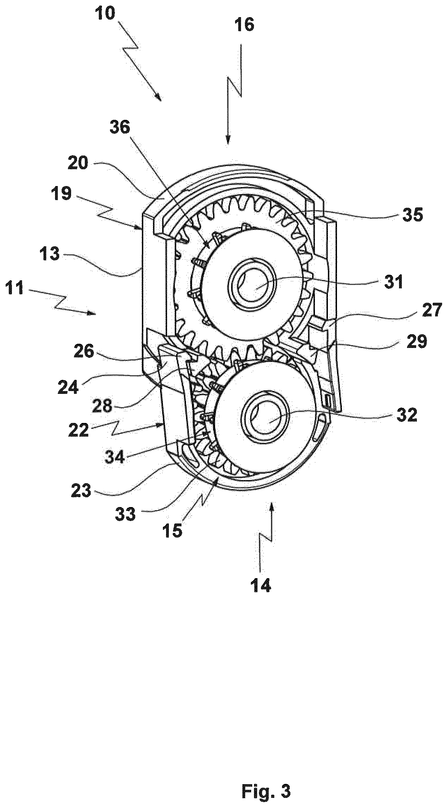

Fig. 3 zeigt eine schematische, perspektivische geöffnete Ansicht der Betätigungseinrichtung 10. Ein Teil mit der Gehäuseseite 18 ist von der zweiten Teilstruktur 13 und ein Teil mit der Gehäuseseite 21 ist von der ersten Teilstruktur 12 entfernt, wodurch die beiden Teilstrukturen 12, 13 geöffnet und deren innerer Aufbau erkennbar ist.

Gemäß dieser Darstellung ist die erste Teilstruktur 12 in eine erste Verriegelungsposition verschwenkt. In dieser ersten Verriegelungsposition greift das erste Kopplungselement 26 in das zweite Kopplungselement 28 zum Herstellen einer formschlüssigen Verbindung ein. Alternativ zu der hier dargestellten ersten Verriegelungsposition kann die erste Teilstruktur 12 derart verschwenkt sein, dass das erste Kopplungselement 27 mit dem zweiten Kopplungselement 29 zum Herstellen einer formschlüssigen Verbindung zusammenwirkt, wobei sich die erste Teilstruktur 12 dann in einer zweiten Verriegelungsposition befindet. Aufgrund der formschlüssigen Verbindung zwischen dem starren ersten Kopplungselement 26 und dem starren zweiten Kopplungselement 28 in der ersten Verriegelungsposition bzw. zwischen dem starren ersten Kopplungselement 27 und dem starren zweiten Kopplungselement 29 in der zweiten Verriegelungsposition ist ein unerwünschtes Ablösen der ersten Teilstruktur 12 von der zweiten Teilstruktur 13 bei einem Zug an einem einzelnen Trum eines hier nicht näher dargestellten Strangelementes verhindert.

Die erste Teilstruktur 12 weist eine Achse 32 auf, die zum drehbaren Lagern eines ersten Zahnrades 33 dient. Das erste Zahnrad 33 ist drehfest mit einem koaxial angeordneten Kettenrad 34 verbunden. Mittels eines mit dem Kettenrad 34 zusammenwirkenden und hier für eine bessere Übersichtlichkeit nicht näher dargestellten Strangelementes 44 ist somit das erste Zahnrad 33 in eine Rotation um die Achse 32 versetzbar. Das erste Zahnrad 33 steht in Wirkverbindung mit einem zweiten Zahnrad 35, das der zweiten Teilstruktur 13 zugeordnet ist. Das zweite Zahnrad 35 ist drehbar um die Achse 31 der zweiten Teilstruktur 13 gelagert. Bei diesem Ausführungsbeispiel ist das zweite Zahnrad 35 drehfest mit einem koaxial angeordneten Kettenrad 36 verbunden. Somit ist eine Bewegung eines ersten Strangelementes 44, das um das erste Zahnrad 33 geführt ist, auf ein zweites Strangelement 47 übertragbar, das um das Kettenrad 36 geführt ist.
Das erste Zahnrad 33 und das zweite Zahnrad 35 sind derart miteinander Wirkverbunden, dass aufgrund der Wechselwirkung zwischen den beiden Zahnrädern 33, 35 ein Verschwenken der ersten Teilstruktur 12 bewirkbar ist. Je stärker an dem ersten Trum 45 oder dem zweiten Trum 46 des ersten Strangelementes 44 gezogen wird, um so stärker wird die erste Teilstruktur 12 in Bezug zu der zweiten Teilstruktur 13 verschwenkt. Hierbei wird das erste Zahnrad 33 koaxial um den Außenumfang des zweiten Zahnrades 35 bzw. die Achse 31 geführt.

Das zweite Strangelement 47 kann mit einem Antrieb zum Antreiben einer Verschattungsanlage verbunden sein. Alternativ kann das zweite Zahnrad 35 kein Kettenrad aufweisen und stattdessen unmittelbar mit einer Antriebsachse verbunden sein.

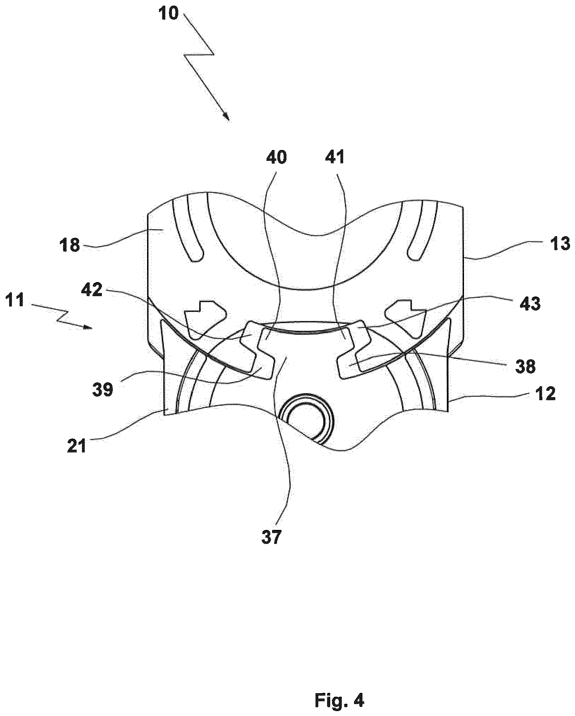

Fig. 4 zeigt einen schematischen, geschnittenen Teilausschnitt einer erfindungsgemäßen Betätigungseinrichtung 10. An einem der zweiten Teilstruktur 13 zugewandten Ende hat die erste Teilstruktur 12 ein drittes Kopplungselement 37. Das dritte Kopplungselement 37 ist zum Zusammenwirken mit einem vierten Kopplungselement 38 der zweiten Teilstruktur 13 ausgebildet. Das dritte Kopplungselement 37 und das vierte Kopplungselement 38 bilden eine zweite Kopplungseinrichtung. Bei diesem Ausführungsbeispiel ist das dritte Kopplungselement 37 als ein im Wesentlichen T-förmiger Rastkopf ausgebildet. Das vierte Kopplungselement 38 ist hier beispielhaft als eine im Wesentlichen T-förmige Rastkopfaufnahme ausgebildet. Das vierte Kopplungselement 38 ist an einem der ersten Teilstruktur 12 zugewandten Ende der zweiten Teilstruktur 13 angeordnet. Bei diesem Ausführungsbeispiel ist das dritte Kopplungselement 37 in der Ebene der Gehäusefläche 18 und das vierte Kopplungselement 38 in der Ebene der Gehäusefläche 21 angeordnet.

Das dritte Kopplungselement 37 und das vierte Kopplungselement 38 sind im Wesentlichen mittig zu einer gedachten Hochachse der ersten Teilstruktur 12 und der zweiten Teilstruktur 13 angeordnet. Des Weiteren sind das dritte Kopplungselement 37 und das vierte Kopplungselement 38 derart ausgebildet, dass das dritte Kopplungselement 37 in der hier dargestellten Freigabeposition der ersten Teilstruktur 12 in Bezug zu der zweiten Teilstruktur 13 berührungslos aus dem vierten Kopplungselement 38 ausführbar ist. Somit stehen in der Freigabeposition das dritte Kopplungselement 37 und das vierte Kopplungselement 38 nicht in Eingriff miteinander. Hierzu ist eine Basis oder Basisöffnung 39 des vierten Kopplungselementes 38 etwas breiter ausgebildet als der T-förmige Rastkopf des dritten Kopplungselementes 37. Das dritte und vierte Kopplungselemente 37, 38 sind starr ausgebildet.

In einer hier nicht näher dargestellten Verriegelungsposition der ersten Teilstruktur 12 greift ein Schenkel 40 bzw. 41 des dritten Kopplungselementes 37 in eine korrespondierend ausgebildete Schenkelaufnahme 42 bzw. 43 ein. Somit ist in der Verriegelungsposition eine formschlüssige Verbindung zwischen der ersten Teilstruktur 12 und der zweiten Teilstruktur 13 herstellbar.

Das dritte Kopplungselement 37 ist im Bereich der Gehäuseseite 21 der ersten Teilstruktur 12 und das vierte Kopplungselement 38 im Bereich der Gehäuseseite 18 der zweiten Teilstruktur 13 angeordnet. Analog zu dem dritten Kopplungselement 37 und dem vierten Kopplungselement 38 kann ein analog hierzu ausgebildetes fünftes Kopplungselement und ein sechstes Kopplungselement vorgesehen sein, die im Bereich der Gehäuseseiten 19, 22 angeordnet sind und somit eine zu der zweiten Kopplungseinrichtung analog ausgebildete dritte Kopplungseinrichtung bilden.

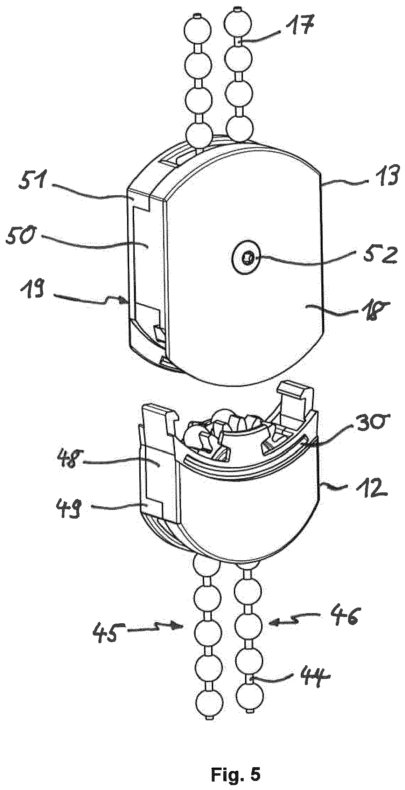

Fig. 5 zeigt eine schematische, perspektivische Ansicht der erfindungsgemäßen Betätigungseinrichtung 10 nach Fig. 1 mit einer abgelösten ersten Teilstruktur 12. Die erste Teilstruktur 12 hat zwei zusammen gesetzte Gehäusehälften 48, 49. Die Gehäusehälften 48, 49 sind bei diesem Ausführungsbeispiel durch Rastverbindung miteinander verbunden.

Die zweite Teilstruktur 13 hat zwei zusammen gesetzte Gehäusehälften 50, 51, die bei diesem Ausführungsbeispiel mittels einer separaten Fixierelementes 52 miteinander verbunden sind. Das Fixierelement 52 kann als eine Sicherung für eine Rastverbindung der beiden Gehäusehälften 50, 51 dienen. Hier ist das Fixierelement 52 als eine Schraube ausgebildet, die durch die Achse 31 geführt ist. Hierbei ist die Achse 31 gemäß Fig. 2 und 3 als eine Hohlachse ausgebildet. Mittels des Fixierelementes 52 ist eine besonders zuverlässige Verbindung zwischen den Gehäusehälften 50, 51 herstellbar. Alternativ oder zusätzlich kann die erste Teilstruktur 13 ein analog ausgebildetes Fixierelement haben.

Die Gehäusehälften 48, 49, 50, 51 sind bei diesem Ausführungsbeispiel unterschiedlich ausgestaltet. Alternativ können die Gehäusehälften 48, 49 der ersten Teilstruktur 12 bzw. die Gehäusehälften 50, 51 der zweiten Teilstruktur 13 identisch ausgebildet sein.

In der Freigabeposition steht die erste Teilstruktur 12 ausschließlich mittels der Nut 30 in Wirkverbindung bzw. in Eingriff mit der zweiten Teilstruktur 13. Bei einem hinreichend starken Zug bzw. im Wesentlichen gleich starken Zug an beiden Trums 45, 46 des Strangelementes 44, beispielsweise durch die Schwerkraft eines in einer Schlaufe des Strangelementes 44 hängenden Kindes, wird diese einzige Verbindung durch ein Aufbiegen der Gehäuseseiten 18, 19 mindestens im Bereich der Nut 30 von der zweiten Teilstruktur 13 gelöst, wodurch sich die erste Teilstruktur 12 wie hier dargestellt vollständig von der zweiten Teilstruktur 13 ablöst.

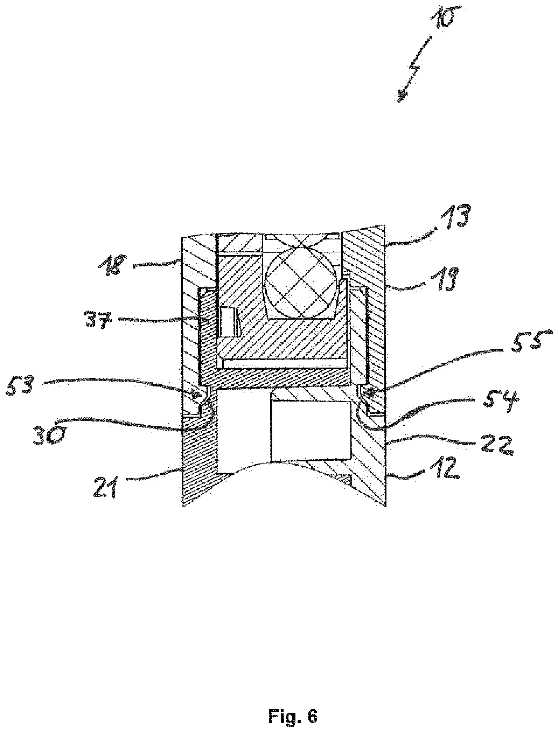

Fig. 6 zeigt eine weitere Schnittdarstellung des schematischen, geschnittenen Teilausschnittes gemäß Fig. 4. In dieser Darstellung ist die in der Freigabeposition einzige lösbare Verbindung zwischen der ersten Teilstruktur 12 und der zweiten Teilstruktur 13 zu erkennen. Diese lösbare Wirkverbindung ist bei diesem Ausführungsbeispiel als eine lösbare Rastverbindung ausgebildet. Hier greift ein Steg 53 der zweiten Teilstruktur 13 in die Nut 30 der ersten Teilstruktur 12 ein. Die Nut 30 ist in eine Vorderseite der Gehäuseseite 21 der ersten Teilstruktur 12 eingebracht. Der Steg 53 ist an einer Innenseite der Gehäuseseite 18 der zweiten Teilstruktur 13 angeordnet.

Analog hierzu greift ein weiterer Steg 55 der zweiten Teilstruktur 13 in eine weitere Nut 54 der ersten Teilstruktur 12 ein. Die weitere Nut 54 ist in eine Vorderseite der Gehäuseseite 22 der ersten Teilstruktur 12 eingebracht. Der weitere Steg 55 ist an einer Innenseite der Gehäuseseite 19 der zweiten Teilstruktur 13 angeordnet.

Alternativ kann die in der Freigabeposition lösbare Verbindung zwischen der ersten Teilstruktur 12 und der zweiten Teilstruktur 13 anstelle eines Steges 53, 55 jeweils mindestens einen Zapfen oder mehrere Zapfen aufweisen. Die Zapfen oder die Stege 53, 55 können flexibel ausgebildet sein, um bei einer hinreichenden Zugkraft an beiden Trums 45, 46 ein Ablösen der ersten Teilstruktur 12 in der Freigabeposition zu gewährleisten. Alternativ oder zusätzlich können die Gehäuseseiten 18, 19 im Bereich der Rastverbindung bzw. der Stege 53, 55 flexibel oder elastisch sein.

**Bezugszeichenliste:**

| | | | |
|---|---|---|---|
| 10 | Betätigungseinrichtung | 49 | Gehäusehälfte |
| 11 | Grundstruktur | 50 | Gehäusehälfte |
| 12 | erste Teilstruktur | 51 | Gehäusehälfte |
| 13 | zweite Teilstruktur | 52 | Fixierelement |
| 14 | Ende | 53 | Steg |
| 15 | Zugangsöffnung | 54 | Nut |
| 16 | Ende | 55 | Steg |
| 17 | Zugangsöffnung | | |
| 18 | Gehäuseseite | | |
| 19 | Gehäuseseite | | |
| 20 | Seitenwandung | | |
| 21 | Gehäuseseite | | |
| 22 | Gehäuseseite | | |
| 23 | Seitenwandung | | |
| 24 | Steg | | |
| 25 | Steg | | |
| 26 | erstes Kopplungselement | | |
| 27 | erstes Kopplungselement | | |
| 28 | zweites Kopplungselement | | |
| 29 | zweites Kopplungselement | | |
| 30 | Nut | | |
| 31 | Achse | | |
| 32 | Achse | | |
| 33 | erstes Zahnrad | | |
| 34 | Kettenrad | | |
| 35 | zweites Zahnrad | | |
| 36 | Kettenrad | | |
| 37 | drittes Kopplungselement | | |
| 38 | viertes Kopplungselement | | |
| 39 | Basisöffnung | | |
| 40 | Schenkel | | |
| 41 | Schenkel | | |
| 42 | Schenkelaufnahme | | |
| 43 | Schenkelaufnahme | | |
| 44 | Strangelement | | |
| 45 | Erster Trum | | |
| 46 | Zweiter Trum | | |
| 47 | Weiteres Strangelement | | |
| 48 | Gehäusehälfte | | |

## Patentansprüche

1. Betätigungseinrichtung, insbesondere für eine Verschattungsanlage, zum Betätigen mit einem Strangelement (44), das einer ersten Teilstruktur (12) zugeordnet ist, welche lösbar an einer zweiten Teilstruktur (13) befestigt ist, wobei die erste Teilstruktur (12) bei einem gleichzeitigen Zug an einem ersten Trum (45) und an einem zweiten Trum (46) des Strangelementes beim Überschreiten einer vorgegebenen Zugkraft von der zweiten Teilstruktur (13) lösbar ist, und mit mindestens einem der ersten Teilstruktur (12) zugeordneten ersten Kopplungselement (26, 27), das in einer Verriegelungsposition mit einem der zweiten Teilstruktur (13) zugeordneten zweiten Kopplungselement (28, 29) in Eingriff steht, wobei die erste Teilstruktur (12) bei einem Zug an einem einzelnen Trum (45, 46) in die Verriegelungsposition verschwenkt ist, und die erste Teilstruktur (12) bei einem gleichzeitigen Zug an den beiden Trums (45, 46) des Strangelements (44) in eine Freigabeposition zum Lösen der ersten Teilstruktur (12) von der zweiten Teilstruktur (13) verschwenkt ist, wobei die erste Teilstruktur (12) und die zweite Teilstruktur (13) in der Freigabeposition mittels einer lösbaren Verbindung miteinander verbunden sind, das erste Kopplungselement (26, 27) in der Freigabeposition nicht mit dem zweiten Kopplungselement (28, 29) in Eingriff steht und in der Verriegelungsposition bei einem Zusammenwirken des ersten Kopplungselementes (26, 27) mit dem zweiten Kopplungselement (28, 29) ein Ablösen der ersten Teilstruktur (12) von der zweiten Teilstruktur (13) aufgrund einer formschlüssigen Verbindung zwischen dem ersten Kopplungselement (26, 27) und dem zweiten Kopplungselement (28, 29) verhindert ist, **dadurch gekennzeichnet, dass** das erste Kopplungselement (26, 27) und das zweite Kopplungselement (28, 29) eine erste Kopplungseinrichtung bilden und dass eine zu der ersten Kopplungseinrichtung separate zweite Kopplungseinrichtung zum Herstellen einer weiteren Verbindung der ersten Teilstruktur (12) mit der zweiten Teilstruktur (13) in einer Verriegelungsposition bei einem Zug an einem einzelnen Trum (45, 46) vorhanden ist, womit gleichzeitig zwei Verbindungen zwischen der ersten Teilstruktur (12) und der zweiten Teilstruktur (13) herstellbar sind.

2. Betätigungseinrichtung nach Anspruch 1, **dadurch gekennzeichnet, dass** die erste Teilstruktur (12) in der Freigabeposition angeordnet ist, wenn eine, insbesondere gleiche, Zugkraft gleichzeitig an dem ersten Trum (45) und an dem zweiten Trum (46) angreift, wobei vorzugsweise die Freigabeposition zwischen einer ersten Verriegelungsposition und einer zweiten Verriegelungsposition angeordnet ist.

3. Betätigungseinrichtung nach Anspruch 1 oder 2, **dadurch gekennzeichnet, dass** die lösbare Verbindung zwischen der ersten Teilstrucktur (12) und der zweiten Teilstruktur (13) in der Freigabeposition als eine erste Verbindung ausgebildet ist, die bei einem gleichzeitigen Zug an dem ersten Trum (45) und dem zweiten Trum (46) beim Überschreiten einer vorgegebenen Zugkraft lösbar ist, und in der Verriegelungsposition eine zu der ersten Verbindung zusätzliche zweite Verbindung vorhanden ist, die mittels des ersten Kopplungselementes (26, 27) und des zweiten Kopplungselementes (28, 29) gebildet ist, vorzugsweise ist das erste Kopplungselement (26, 27) als ein erstes Rastelement, insbesondere ein Rasthaken, und/oder das zweite Kopplungselement (28, 29) als ein korrespondierend zu dem ersten Rastelement zweites Rastelement, insbesondere als eine Rasthakenaufnahme, ausgebildet.

4. Betätigungseinrichtung nach einem der vorhergehenden Ansprüche, **dadurch gekennzeichnet, dass** bei einem Zug nur an dem ersten Trum (45) die erste Teilstruktur (12) in Richtung des zweiten Trums (46) verschwenkt ist, insbesondere wirkt das dem ersten Trum (45) benachbarte erste Kopplungselement (26) mit dem dem ersten Trum (45) zugeordneten zweiten Kopplungselement (28) formschlüssig und/oder kraftschlüssig zusammen.

5. Betätigungseinrichtung nach einem der vorhergehenden Ansprüche, **dadurch gekennzeichnet, dass** bei einem Zug nur an dem zweiten Trum (46) die erste Teilstruktur (12) in Richtung des ersten Trums (45) verschwenkt ist, insbesondere wirkt das dem zweiten Trum (46) benachbarte erste Kopplungselement (27) mit dem dem zweiten Trum (46) zugeordneten zweiten Kopplungselement (29) formschlüssig und/oder kraftschlüssig zusammen.

6. Betätigungseinrichtung nach einem der vorhergehenden Ansprüche, **dadurch gekennzeichnet, dass** die erste Teilstruktur (12) als ein unteres Gehäuseteil und/oder die zweite Teilstruktur (13) als ein oberes Gehäuseteil ausgebildet ist, vorzugsweise hat die erste Teilstruktur (12) mindestens eine Gehäuseseite (12, 13) mit einer Achse (32) zum drehbaren Lagern eines ersten Zahnrades (33), insbesondere hat die erste Teilstruktur (12) eine im Wesentlichen U-förmige Seitenwandung (23), dessen Schenkel in Richtung der zweiten Teilstruktur (13) gerichtete die Stege (24, 25) bilden, an deren freien Enden jeweils ein erstes Kopplungselement (26, 27) zum Zusammenwirken mit einem zweiten Kopplungselement (28, 29) der zweiten Teilstruktur (13) angeordnet ist.

7. Betätigungseinrichtung nach einem der vorhergehenden Ansprüche, **dadurch gekennzeichnet, dass** die erste Teilstruktur (12) und die zweite Teilstruktur (13) jeweils an zwei voneinander abgewandten Seiten eine Gehäuseseite (18, 19; 21, 22) aufweisen, vorzugsweise wirken die Gehäuseseiten (18, 19; 21, 22) der ersten Teilstruktur (12) und der zweiten Teilstruktur (13) zum Herstellen einer bei einem gleichzeitigen Zug an beiden Trums lösbaren Verbindung der ersten Teilstruktur (12) mit der zweiten Teilstruktur (13) zusammen.

8. Betätigungseinrichtung nach einem der vorhergehenden Ansprüche, **dadurch gekennzeichnet, dass** die in der Freigabeposition lösbare Verbindung zwischen der ersten Teilstruktur (12) und der zweiten Teilstruktur (13) mindestens ein teilweises Verschwenken der ersten Teilstruktur (12) um eine Achse (31) im Bereich der zweiten Teilstruktur (13) ermöglicht, vorzugsweise weist die lösbare Verbindung eine kreissegmentartige Nut (30, 54)) und einen korrespondierend ausgebildeten, insbesondere kreissegmentartigen, Steg (53, 55) auf, der in die kreissegmentartige Nut (30, 54) zum Herstellen der lösbaren Verbindung eingreift.

9. Betätigungseinrichtung nach einem der vorhergehenden Ansprüche, **dadurch gekennzeichnet, dass** die zweite Kopplungseinrichtung mindestens einen im Wesentlichen T-förmigen Rastkopf (37) und mindestens eine korrespondierend zu dem Rastkopf (37) ausgebildete im Wesentlichen T-förmige Rastkopfaufnahme (43) aufweist, vorzugsweise ist der Rastkopf (37) bei einem gleichzeitigen Zug an beiden Trums berührungsfrei aus der Rastkopfaufnahme (43) lösbar und/oder greift ein Schenkel (40, 41) des Rastkopfes (37) in eine korrespondierend ausgebildete Schenkelaufnahme (42, 43) der Rastkopfaufnahme (43) bei einem Zug an einem einzelnen Trum (45, 46) formschlüssig ein.

10. Verschattungsanlage, insbesondere eine Jalousie, ein Plissee und/oder ein Rollo, mit einer Betätigungseinrichtung (10) nach einem der vorhergehenden Ansprüche.

## Claims

1. Actuating device, especially for a shading system, for actuation with a string element (44) that is associated with a first partial structure (12) that is detachably fastened to a second partial structure (13), wherein the first partial structure (12) can be detached from the second partial structure (13) by simultaneously pulling a first strand (45) and a second strand (46) of the string element with a pulling force that exceeds a predetermined value, and with at least one first coupling element (26, 27) that is associated with the first partial structure (12) and which, in a locking position, meshes with a second coupling element (28, 29) that is associated with the second partial structure (13), wherein with a pull on an individual strand (45, 46) the first partial structure (12) is pivoted into the locking position, and with a simultaneous pull on the two strands (45, 46) of the string element (44) the first partial structure (12) is pivoted into a release position for detaching the first partial structure (12) from the second partial structure (13), wherein the first partial structure (12) and the second partial structure (13) in the release position are connected to one another by means of a detachable connection, wherein the first coupling element (26, 27), in the release position, does not mesh with the second coupling element (28, 29), and in the locking position, the first coupling element (26, 27), by cooperating with the second coupling element (28, 29), prevents the first partial structure (12) from detaching from the second partial structure (13) due to a positive-locking connection between the first coupling element (26, 27) and the second coupling element (28, 29), **characterised in that** the first coupling element (26, 27) and the second coupling element (28, 29) form a first coupling device, and that a second coupling device, separate from the first coupling device, is present to establish in a locking position with a pull on a single strand (45, 46), an additional connection of the first partial structure (12) to the second partial structure (13), whereby two connections between the first partial structure (12) and the second partial structure (13) can be simultaneously established.

2. Actuating device according to claim 1, **characterised in that** the first partial structure (12) is arranged in the release position when an especially equal pulling force acts simultaneously on the first strand (45) and on the second strand (46), wherein the release position is preferably arranged between a first locking position and a second locking position.

3. Actuating device according to claim 1 or 2, **characterised in that** the detachable connection between the first partial structure (12) and the second partial structure (13) in the release position is designed as a first connection that is detachable by simultaneously pulling the first strand (45) and the second strand (46) with a force that exceeds a predetermined pulling force, and in the locking position, in addition to the first connection, there is a second connection that is formed by means of the first coupling element (26, 27) and the second coupling element (28, 29), wherein preferably the first coupling element (26, 27) is designed as a first latching element, in particular a latching hook, and/or the second coupling element (28, 29) is designed as a second latching element, in particular as a latching hook retainer that corresponds to the first latching element.

4. Actuating device according to one of the preceding claims, **characterised in that** when only the first strand (45) is pulled the first partial structure (12) is pivoted towards the second strand (46), in particular the first coupling element (26) adjacent to the first strand (45) cooperates in a positive-locking and/or friction-locking manner with the second coupling element (28) associated with the first strand (45).

5. Actuating device according to one of the preceding claims, **characterised in that** when only the second strand (46) is pulled the first partial structure (12) is pivoted towards the first strand (45), in particular the first coupling element (27) adjacent to the second strand (46) cooperates in a positive-locking and/or friction-locking manner with the second coupling element (29) associated with the first strand (46).

6. Actuating device according to one of the preceding claims, **characterised in that** the first partial structure (12) is designed as a lower housing part and/or the second partial structure (13) is designed as an upper housing part, the first partial structure (12) preferably has at least one housing side (12, 13) with an axle (32) for rotatably mounting a first gear wheel (33), in particular, the first partial structure (12) has an essentially U-shaped side wall (23), whose legs form the webs (24, 25) directed towards the second partial structure (13), wherein a first coupling element (26, 27) is arranged on the free end of each web to cooperate with a second coupling element (28, 29) of the second partial structure (13).

7. Actuating device according to one of the preceding claims, **characterised in that** the first partial structure (12) and the second partial structure (13) each have a housing side (18, 19; 21, 22) on two sides that face away from one another, wherein the housing sides (18, 19; 21, 22) of the first partial structure (12) and of the second partial structure (13) preferably cooperate when both strands are pulled simultaneously to produce a detachable connection of the first partial structure (12) with the second partial structure (13).

8. Actuating device according to one of the preceding claims, **characterised in that** in the release position the detachable connection between the first partial structure (12) and the second partial structure (13) makes possible at least a partial pivoting of the first partial structure (12) about an axle (31) in the area of the second partial structure (13), and the detachable connection preferably possesses an arc-shaped groove (30, 54) and a correspondingly designed, especially arc-shaped web (53, 55), that meshes with the arc-shaped groove (30, 54) to establish the detachable connection.

9. Actuating device according to one of the preceding claims, **characterised in that** the second coupling device possesses at least one essentially T-shaped latch head (37) and at least one essentially T-shaped latching head retainer (43) designed to correspond to the latching head (37), wherein with a simultaneous pull on both strands the latching head (37) is preferably contactlessly detachable from the latching head retainer (43) and/or with a pull on a single strand (45, 46), one leg (40, 41) of the latching head (37) meshes in a positive-locking manner with a correspondingly designed leg retainer (42, 43) of the latching head retainer (43).

10. Shading unit, especially a blind, a pleated blind and/or a roller blind, with an actuating device (10) according to one of the preceding claims.

## Revendications

1. Dispositif d'actionnement, plus particulièrement pour un dispositif d'ombrage, pour l'actionnement avec un élément à cordon (44), qui correspond à une première structure partielle (12), qui est fixée de manière amovible à une deuxième structure partielle (13), la première structure partielle (12) pouvant être détachée de la deuxième structure partielle (13) lors d'une traction simultanée sur un premier brin (45) et sur un deuxième brin (46) de l'élément à cordon lors du dépassement d'une force de traction prédéterminée, et avec au moins un premier élément de couplage (26, 27) correspondant à la première structure partielle (12), qui est emboîté dans une position de verrouillage avec un deuxième élément de couplage (28, 29) correspondant à la deuxième structure partielle (13), la première structure partielle (12) étant pivotée, lors d'une traction sur un seul brin (45, 46), dans la position de verrouillage et la première structure partielle (12) étant pivotée, lors d'une traction simultanée sur les deux brins (45, 46) de l'élément à cordon (44), dans une position de déverrouillage pour le détachement de la première structure partielle (12) de la deuxième structure partielle (13), la première structure partielle (12) et la deuxième structure partielle (13) étant reliées entre elles dans la position de déverrouillage au moyen d'une liaison amovible, le premier élément de couplage (26, 27) n'étant pas emboîté, dans la position de déverrouillage, avec le deuxième élément de couplage (28, 29) et, dans la position de verrouillage, lors d'une interaction du premier élément de couplage (26, 27) avec le deuxième élément de couplage (28, 29), un détachement de la première structure partielle (12) de la deuxième structure partielle (13) est empêché du fait d'une liaison par complémentarité de forme entre le premier élément de couplage (26, 27) et le deuxième élément de couplage (28, 29), **caractérisé en ce que** le premier élément de couplage (26, 27) et le deuxième élément de couplage (28, 29) forment un premier dispositif de couplage et **en ce qu'**un deuxième dispositif de couplage, séparé du premier dispositif de couplage, est prévu pour la réalisation d'une liaison supplémentaire de la première structure partielle (12) avec la deuxième structure partielle (13) dans une position de verrouillage lors d'une traction sur un seul brin (45, 46), deux liaisons pouvant ainsi être réalisées simultanément entre la première structure partielle (12) et la deuxième structure partielle (13).

2. Dispositif d'actionnement selon la revendication 1, **caractérisé en ce que** la première structure partielle (12) est disposée dans la position de déverrouillage lorsqu'une force de traction, plus particulièrement égale, est exercée simultanément sur le premier brin (45) et sur le deuxième brin (46), de préférence la position de déverrouillage étant disposée entre une première position de verrouillage et une deuxième position de verrouillage.

3. Dispositif d'actionnement selon la revendication 1 ou 2, **caractérisé en ce que** la liaison amovible entre la première structure partielle (12) et la deuxième structure partielle (13) est conçue, dans la position de déverrouillage, comme une première liaison qui, lors d'une traction simultanée sur le premier brin (45) et sur le deuxième brin (46), est amovible lors d'un dépassement d'une force de traction prédéterminée et, dans la position de verrouillage, il existe, en plus de la première liaison, une deuxième liaison qui est formée au moyen du premier élément de couplage (26, 27) et du deuxième élément de couplage (28, 29), de préférence le premier élément de couplage (26, 27) est conçu comme un premier élément d'encliquetage, plus particulièrement un crochet d'encliquetage, et/ou le deuxième élément de couplage (28, 29) est conçu comme un deuxième élément d'encliquetage correspondant au premier élément d'encliquetage, plus particulièrement comme un logement de crochet d'encliquetage.

4. Dispositif d'actionnement selon l'une des revendications précédentes, **caractérisé en ce que**, lors d'une traction uniquement sur le premier brin (45), la première structure partielle (12) est pivotée en direction du deuxième brin (46), plus particulièrement le premier élément de couplage (26) adjacent au premier brin (45) agit par complémentarité de forme et/ou par friction avec le deuxième élément de couplage (28) correspondant au premier brin (45).

5. Dispositif d'actionnement selon l'une des revendications précédentes, **caractérisé en ce que**, lors d'une traction uniquement sur le deuxième brin (46), la première structure partielle (12) est pivotée en direction du premier brin (45), plus particulièrement le premier élément de couplage (27) adjacent au deuxième brin (46) agit par complémentarité de forme et/ou par friction avec le deuxième élément de couplage (29) correspondant au deuxième brin (46).

6. Dispositif d'actionnement selon l'une des revendications précédentes, **caractérisé en ce que** la première structure partielle (12) est conçue comme une partie de boîtier inférieure et/ou la deuxième structure partielle (13) est conçue comme une partie de boîtier supérieure, de préférence la première structure partielle (12) comprend au moins un côté de boîtier (12, 13) avec un axe (32) pour le logement rotatif d'une première roue dentée (33), plus particulièrement la première structure partielle (12) comprend une paroi latérale (23) globalement en forme de U dont les branches forment des nervures (24, 25), orientées en direction de la deuxième structure partielle (13), sur les extrémités libres desquelles se trouve un premier élément de couplage (26, 27) pour une interaction avec un deuxième élément de couplage (28, 29) de la deuxième structure partielle (13).

7. Dispositif d'actionnement selon l'une des revendications précédentes, **caractérisé en ce que** la première structure partielle (12) et la deuxième structure partielle (13) comprennent, sur chacun de deux côtés opposés, un côté de boîtier (18, 19 ; 21, 22), de préférence les côtés du boîtier (18, 19 ; 21, 22) de la première structure partielle (12) et de la deuxième structure partielle (13) interagissent pour la création d'une liaison amovible entre la première structure partielle (12) et la deuxième structure partielle (13) lors d'une traction simultanée sur les deux brins.

8. Dispositif d'actionnement selon l'une des revendications précédentes, **caractérisé en ce que** la liaison amovible dans la position de verrouillage, entre la première structure partielle (12) et la deuxième structure partielle (13) permet au moins un pivotement partiel de la première structure partielle (12) autour d'un axe (31) au niveau de la deuxième structure partielle (13), de préférence la liaison amovible comprend une rainure (30, 54) en forme de segment circulaire et une nervure (53, 55), conçue de manière correspondante, plus particulièrement en forme de segment circulaire, qui s'emboîte dans la rainure (30, 54) en forme de segment circulaire pour la réalisation de la liaison amovible.

9. Dispositif d'actionnement selon l'une des revendications précédentes, **caractérisé en ce que** le deuxième dispositif de couplage comprend au moins une tête d'encliquetage (37) globalement en forme de T et au moins un logement de tête d'encliquetage (43) globalement en forme de T, conçu de manière correspondante à la tête d'encliquetage (37), de préférence la tête d'encliquetage (37) pouvant être retirée, lors d'une traction simultanée sur les deux brins, sans contact, hors du logement de tête d'encliquetage (43) et/ou une branche (40, 41) de la tête d'encliquetage (37) s'emboîte par complémentarité de forme dans un logement de branche (42, 43), conçu de manière correspondante, du logement de tête d'encliquetage (43) lors d'une traction sur un seul brin (45, 46).

10. Dispositif d'ombrage, plus particulièrement un store vénitien, un plissé et/ou un volet roulant, avec un dispositif d'actionnement (10) selon l'une des revendications précédentes.
